# EUROPÄISCHE PATENTANMELDUNG

(11) **EP 2 112 721 A1**
(43) Veröffentlichungstag der Anmeldung: **28.10.2009**
(21) Anmeldenummer: 09156581.2
(22) Anmeldetag: 30.03.2009
(51) Int. Cl.: H01R 13/533, H01R 13/58, H01R 43/24, H01R 13/52, H01R 101/00, B60L 11/00

(54) **Dichte Steckerverbindung für Hochspannungskabel im Automobilbau**

(30) Priorität: 23.04.2008 CH 6392008
(71) Anmelder: Satrotec AG, 8157 Dielsdorf (CH)
(72) Erfinder: Scheiber, Patrik, 8155 Niederhasli (CH)
(74) Vertreter: Felber, Josef

(57) **Zusammenfassung**

Die Steckerverbindung ist für Hochspannungskabel (2) von Elektro- und Hybridfahrzeugen bestimmt, und schliesst einen Stecker mit Aufnahmebuchse ein, in welche die Kabellitze des Hochspannungskabels eingesteckt wird. Die Stecker-Buchsenverbindung wird von aussen zur Abdichtung komplett mit einem thermoplastischen Elastomer oder einem reinen Thermoplast auf ca. 160°C bis ca. 190°C umspritzt. Als Besonderheit ist vor dem Ende der Kabelisolation (3) unter der Umspritzung (4) ein Pressring (9) angeordnet, welcher die Kabelisolation (3) umschliesst und mechanisch von mindestens zwei Seiten verpresst ist, sodass der Pressring (9) inelastisch deformiert die Kabelisolation (3) sowie das darunterliegende Abschirmgeflecht (11), die Litzenisolation (12) sowie die Kabellitze (5) permanent klemmend einschnürt. Das Hochspannungskabel mit Umspritzung (4) ist hier an der Stelle des Pressrings (9) in einem Querschnitt gezeigt. Es wurde in einen sechseckigen Querschnitt gepresst und wird vom Pressring (9) permanent in dieser Form dichtend verklemmt.

## Beschreibung

Diese Erfindung betrifft eine Steckerverbindung wie sie in erster Linie bei elektrisch angetriebenen Fahrzeugen Verwendung findet, seien es Hybridfahrzeuge oder reine Elektromobile. Bei solchen Fahrzeugen müssen zum Speisen der Elektromotoren Ströme auf einer Spannung von 400 Volt und höher und mit Stromstärken von 150 A und höher in Kabeln und den zugehörigen Kabelverbindungen fliessen können. Daher nennt man diese Kabel Hochspannungskabel oder in der Fachsprache High Voltage Cable oder HVC. Sie werden international mit einer orangefarbenen Isolation versehen. Als Kabel für die Stromführung werden solche mit einem grossen Litzenquerschnitt verwendet, um Widerstandverluste gering zu halten. Die Litzen sind von einer Isolation umschlossen und dieselbe dann ihrerseits von einem metallischen Schutzgeflecht umfasst. Die hohen Spannungen machen nämlich eine besondere Abschirmung nötig, sodass andere elektrische Geräte in der Nähe nicht von elektrischen und magnetischen Feldern gestört werden. Das Schutzgeflecht ist dann von einer temperaturbeständigen orangefarbenen Kabelisolation aus einem Silikon eingefasst, wobei aber auch andere Materialien als Kabelisolation in Frage kommen können. Diese Kabelisolation hält Temperaturen von bis zu 200°C und höher aus.

An ein solches Kabelende wird ein zugehöriger Stecker montiert. Und hier besteht das technische Problem darin, diese Steckerverbindung auf der Kabelseite hinreichend dicht zu gestalten. Diese Stecker sind in einem Fahrzeug extremen Belastungen ausgesetzt. Es gibt im Fahrzeugbetrieb aufgrund der Witterungseinflüsse grosse Temperaturdifferenzen und grosse Schwankungen der Luftfeuchtigkeit, welche der Steckerverbindung zusetzen. Ausserdem werden Fahrzeuge ab und zu mit Heissdampf abgespritzt, und die Steckerverbindungen müssen daher auch solchen Heissdampfstrahlen standhalten und dicht bleiben. Dazu kommt der Alterungsprozess. Eine Steckerverbindung, also der Übergang vom Kabel zum Stecker, soll auch nach mehreren Jahren noch einwandfrei dicht sein.

Die Automobilbranche hat daher Normen erlassen, welchen solche Steckerverbindungen genügen müssen. Damit eine Steckerverbindung zum Beispiel einem Heissdampfstrahl ausgesetzt werden darf, muss sie die Norm DIN 40050 IP69K erfüllen. Zur Prüfung der Normerfüllung wird von der Kabelseite Pressluft in das Innere der Isolation geblasen, und es wird unter Wasser geprüft, ob die Steckerverbindung dicht bleibt. Natürlich ahmt dieser Test nicht genau die Beanspruchung der Steckerverbindung im eingebauten Fahrzeug nach, aber der Test ist immerhin praktisch durchzuführen und wird daher breit angewendet.

Die herkömmlichen Steckerverbindungen für Hochspannungskabel von Elektro- und Hybridfahrzeugen weisen einen Stecker mit einer Aufnahmebuchse für die Kabellitze auf, und die Stecker-Buchsenverbindung ist von aussen zur Abdichtung komplett mit einem thermoplastischen Elastomer oder einem reinen Thermoplast umspritzt. Die Umspritzung erfolgt auf einer Temperatur des Spritzgutes von ca. 160 bis ca. 190°C. Wenn nun die Steckerverbindung nach Auskühlung der Umspritzung einem Drucklufttest wie oben beschrieben ausgesetzt wird, indem von der Kabelseite her Druckluft auf zum Beispiel 1 bar durch das Innere der Kabelisolation auf die Steckerverbindung gepresst wird, so tritt diese vorne zwischen Kabelisolation und Litze aus dem Kabel aus und schliesslich strömt sie zwischen der Kabelisolation und dem gerade zur Abdichtung aufgespritzten thermoplastischen Elastomer oder einem reinen Thermoplast zurück nach draussen.

Die Aufgabe der vorliegenden Erfindung ist es deshalb, eine Steckerverbindung für Hochleistungskabel anzugeben, welche erhöhten Anforderungen in Bezug auf die Dichtigkeit auf der Kabelseite des Steckers standhält und insbesondere den obengenannten Druckluftversuch übersteht.

Diese Aufgabe wird gelöst von einer Steckerverbindung für Hochspannungskabel von Elektro- und Hybridfahrzeugen, wobei der Stecker eine Aufnahmebuchse für die Kabellitze aufweist, und die Stecker-Buchsenverbindung von aussen zur Abdichtung komplett mit einem thermoplastischen Elastomer oder einem reinen Thermoplast auf 160°C bis ca. 190°C umspritzt ist, **dadurch gekennzeichnet, dass** vor dem Ende der Kabelisolation unter der Umspritzung ein Pressring angeordnet ist, welcher die Kabelisolation umschliesst und mechanisch von mindestens zwei Seiten verpresst ist, sodass er unelastisch deformiert die Kabelisolation **sowie** das darunterliegende Abschirmgeflecht, die Zwischenisolation sowie die Kabellitze permanent klemmend einschnürt.

In den Figuren ist diese Steckerverbindung anhand von mehreren Zeichnungen dargestellt und sie wird im Folgenden im Einzelnen beschrieben.

Es zeigt:
- Figur 1:: Einen rechtwinkligen Stecker mit der herkömmlichen Steckerverbindung zum zuführenden Hochspannungskabel in einem Längsschnitt dargestellt;
- Figur 2:: Einen rechtwinkligen Stecker mit dem Pressring um den Endbereich der Kabelisolation des Hochspannungskabels in einem Längsschnitt dargestellt;
- Figur 3:: Einen rechtwinkligen Stecker mit dem Pressring um den Endbereich der Kabelisolation des Hochspannungskabels in einer perspektivischen Darstellung;
- Figur 4:: Den Pressring in einer perspektivischen Darstellung;
- Figur 5:: Den Pressring in einem diametralen Schnitt gezeigt;
- Figur 6:: Die fertige Kabelverbindung an der Stelle des verpressten Pressrings in einem Querschnitt dargestellt;
- Figur 7:: Die fertige Kabelverbindung von der Seite her gesehen, mit aufgeschnittener Kabelumspritzung.

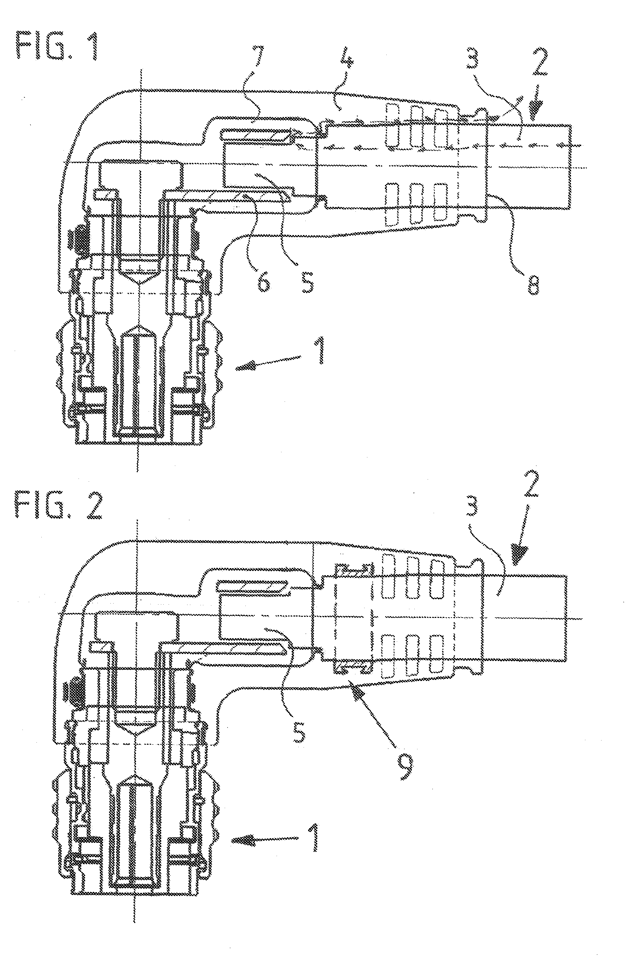

Die Figur 1 zeigt eine konventionelle Steckerverbindung in Form eines rechtwinkligen Steckers 1, der mit einem zuführenden Hochspannungskabel 2 verbunden ist, in einem Längsschnitt dargestellt. Die Aussenisolation 3 des Hochspannungskabels 2 aus bis zu 200°C temperaturbeständigem Silikon steckt ca. 30mm weit in der Umspritzung 4 des Steckers und die Umspritzung 4 bildet das Steckergehäuse. Die Kupferlitze 5 des Hochspannungskabels 2 steckt in einer Metallbuchse 6, welche zur Steckerkonstruktion gehört, wobei diese Metallbuchse 6 in einer Fassung 7 aus Kunststoff gehalten ist. Die Problematik, mit welcher sich die vorliegende Erfindung beschäftigt, ist die Dichtigkeit eines solchen Steckers, nämlich die Dichtigkeit des Überganges vom Hochspannungskabel zur Steckerumspritzung. Damit eine Steckerverbindung zum Beispiel einem Heissdampfstrahl ausgesetzt werden darf, muss sie die Norm DIN 40050 IP69K erfüllen. Wenn nun zur Prüfung der Normerfüllung von der Kabelseite Pressluft in das Innere der Isolation geblasen wird, so strömt diese Luft durch das Kabelinnere, also längs der Litze 5 zwischen derselben und der Kabelisolation nach vorne zum Kabelende. Von dort strömt die Luft in kleinen Mengen wie mit den kleinen Pfeilen eingezeichnet hernach zwischen der Aussenseite der Kabelisolation 3 und der Innenseite der Umspritzung 4 zurück und schliesslich am Ende 8 der Umspritzung nach aussen. Es geht also darum, eine Steckerverbindung für Hochspannungskabel von Elektro- und Hybridfahrzeugen zu schaffen, welche diesen Test einwandfrei übersteht, sodass keine Pressluft nach aussen dringen kann.

Die Lösung wird in Figur 2 aufgezeigt. Dort ist derselbe rechtwinklige Stecker gezeigt, mit dem entscheidenden Unterschied jedoch, dass hier ein Pressring 9 den Endbereich der Kabelisolation 3 des Hochspannungskabels 2 umklammert. Dieser Pressring 9 aus einem Metall oder Buntmetall, zum Beispiel aus Stahl, Aluminium, Kupfer, Bronze, Messing oder aus einer Legierung, wird von mindestens zwei Seiten her in radialer Richtung zum Kabelquerschnitt unelastisch verpresst und erzeugt eine starke lokale Verklemmung der Kabelisolation 3 mit dem darunterliegenden Schutzgeflecht, der abermals darunterliegenden Litzenisolation und der eigentlichen Kabellitze 5.

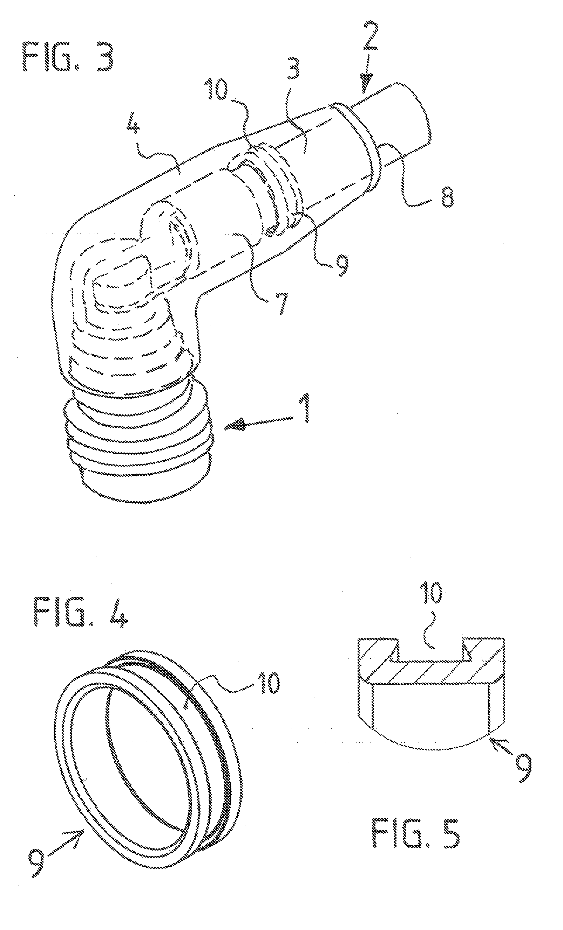

In Figur 3 ist dieser rechtwinklige Stecker mit dem besagten Pressring 9 um den Endbereich der Kabelisolation 3 des Hochspannungskabels 2 in einer perspektivischen Darstellung gezeigt. Wie man sieht, ist der Pressring 9 von einiger Breite, zum Beispiel 5mm breit. Auf seiner Aussenseite ist eine Nut 10 aus ihm ausgenommen. Die Kabellitze steckt in der Buchse, welche von der Steckerfassung 7 gehalten ist.

Wie man anhand von Figur 4 erkennt, in welcher der Pressring 9 in einer perspektivischen Darstellung gezeigt ist, weist diese Nut 10 im Querschnitt eine schwalbenschwanzförmige Form auf. Noch besser erkennt man das in Figur 5, welche einen vergrösserten Ausschnitt des Pressrings 9 in einem radialen Schnitt durch denselben zeigt. Während der Pressring 9 zum Beispiel bei einem Innendurchmesser von 15mm und einem Aussendurchmesser von 18mm eine Breite von 5mm aufweist, ist diese Nut 10 beispielsweise 2.2mm breit und 0.75mm tief. Diese Masse sind jedoch nur als Beispiel erwähnt und es ist klar, dass der Pressring 9 auch davon abweichende Masse aufweisen kann.

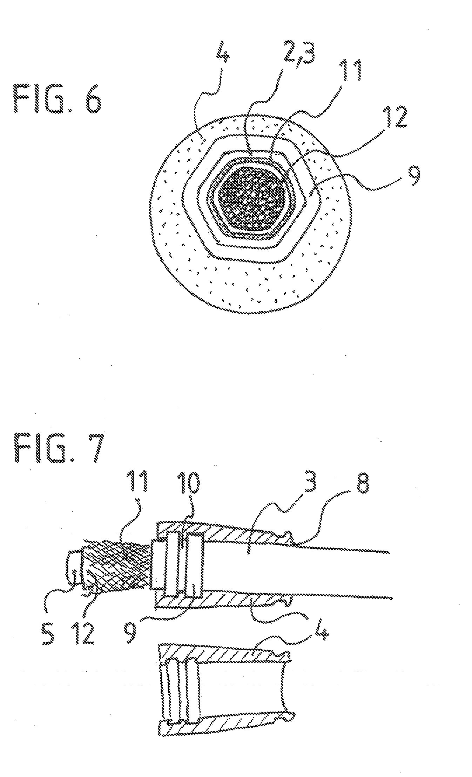

In Figur 6 ist die fertige Kabelverbindung an der Stelle des verpressten Pressrings 9 in einem Querschnitt dargestellt. Von aussen nach innen folgt zunächst die Umspritzung 4 am Stecker 1, hernach der Pressring 9, der durch die Verpressung von zwei gegenüberliegenden Seiten je in radialer Richtung zueinander hin zu einem Sechseck geformt wurde, unter Zusammenpressens und Einklemmens des durch den Pressring 9 verlaufenden Hochspannungskabels. Im Innern des Pressrings 9 folgt dann zunächst die Kabelisolation 3 des Hochspannungskabels, hernach das Schutzgeflecht 11, dann die Litzenisolation 12 und schliesslich im Zentrum die Kabellitze 5 des Hochspannungskabels 2. Das ganze Hochspannungskabel 2 ist an dieser Stelle zu einem hier sechseckigen Querschnitt verpresst bzw. zusammengeklemmt. Diese Verklemmung erzeugt eine stark erhöhte Dichtung. Es ist klar, dass auch andere Pressformen als ein Sechseck gewählt werden können, aber eine Sechseckform bewährt sich besonders gut. Wenn innerhalb der Kabelisolation 3 des Hochspannungskabels 2 von einer Seite ein Pressluftdruck erzeugt wird, so staut sich dieser Druck an der Stelle der Einklemmung weitestgehend. Wenn ausnahmsweise kleine Luftmengen durch die Verklemmung durchzukriechen vermögen, so vermag diese Luft aber nicht mehr auf der Aussenseite des Hochspannungskabels zurückzuströmen. Denn hierzu müsste sie zwischen der Aussenseite des Pressringes 9 und der Innenseite der Umspritzung 4 nach aussen strömen. Die Umspritzung 4 erzeugt mit der Aussenseite des Pressringes 9 eine dichte und innige Verkrallung, was insbesondere von der Nut 10 mit schwalbenschwanzförmigem Querschnitt in der Aussenseite des Pressringes 9 unterstützt wird.

Die Figur 7 zeigt schliesslich die fertige Kabelverbindung von der Seite her gesehen, mit aufgeschnittener Kabelisolation. Links erkennt man das aus der Isolation ragende Schutzgeflecht 11. Die Kabelisolation 3 des Hochspannungskabels 2 ist vom Pressring 9 eingeklemmt, und dessen mit einer Nut 10 versehene Aussenseite schafft mit der Umspritzung 4 eine Labyrinthdichtung, welche ein Durchströmen von Luft wirksam verhindert. Der Pressring 9 kann ausserdem auf seiner Innenseite mit umlaufenden Rillen ausgestattet sein, welche zum Verkrallen mit der zu umschliessenden Kabelisolation 3 bestimmt ist, sodass auch dort ein Labyrinth erzeugt wird, welches die Dichtigkeit steigert.

Bevor die Umspritzung aus einem thermoplastischen Polyester (TPE) auf einer Temperatur von ca. 160 bis ca. 190°C aufgebracht wird, kann die bis 200°C temperaturbeständige Silikon-Kabelisolation des Hochspannungskabels 2 zusätzlich mit einem Primer vorbehandelt werden, der zum Beispiel säurehaltig sein kann, wodurch eine innigere Verbindung der Kabelisolation 3 mit dem umspritzten Kunststoff 4 entsteht. Wahlweise kann der Primer auch dem zu spritzenden thermoplastischen Polyester (TPE) beigemengt werden, sodass das Umspritzen in einem Arbeitsgang erfolgen kann, statt eine gesonderte Vorbehandlung mit dem Primer vorzunehmen.

## Patentansprüche

**1.** Steckerverbindung für Hochspannungskabel von Elektro- und Hybridfahrzeugen, wobei der Stecker (1) eine Aufnahmebuchse (6) als Kabelaufnahme für die Kabellitze (5) aufweist, und die Stecker-Buchsenverbindung von aussen zur Abdichtung komplett mit einem thermoplastischen Elastomer oder einem reinen Thermoplast auf 160°C bis ca. 190°C umspritzt ist, ***dadurch gekennzeichnet,* dass** vor dem Ende der Kabelisolation (3) unter der Umspritzung (4) ein Pressring (9) angeordnet ist, welcher die Kabelisolation (3) umschliesst und mechanisch von mindestens zwei Seiten verpresst ist, sodass er unelastisch deformiert die Kabelisolation (3) sowie das darunterliegende Abschirmgeflecht (11), die Litzenisolation (12) sowie die Kabellitze (5) permanent klemmend einschnürt.

**2.** Steckerverbindung für Hochspannungskabel von Elektro- und Hybridfahrzeugen nach Anspruch 1, ***dadurch gekennzeichnet,* dass** der Pressring (9) auf seiner Aussenseite eine umlaufende Nut (10) aufweist, welche einen schwalbenschwanzförmigen Querschnitt aufweist, die zum Verkrallen der darauf zu applizierenden Umspritzung (4) mit thermoplastischen Kunststoff bestimmt ist.

**3.** Steckerverbindung für Hochspannungskabel von Elektro- und Hybridfahrzeugen nach einem der vorangehenden Ansprüche, ***dadurch gekennzeichnet,* dass** der Pressring (9) seiner Innenseite mit umlaufenden Rillen ausgestattet ist, welche zum Verkrallen mit der zu umschliessenden Kabelisolation (3) bestimmt ist.

**4.** Steckerverbindung für Hochspannungskabel von Elektro- und Hybridfahrzeugen nach einem der vorangehenden Ansprüche, ***dadurch gekennzeichnet,* dass** der Pressring (9) aus Metall gefertigt ist und in verpresstem Zustand zu einem mindestens sechseckigen Ring umgeformt ist, sodass das in seinem Innern verklemmte Kabel (2) im Querschnitt zu einem ebensolchen mindestens sechseckigen Querschnitt verpresst ist.

**4.** Steckerverbindung für Hochspannungskabel von Elektro- und Hybridfahrzeugen nach einem der Ansprüche 1 bis 3, ***dadurch gekennzeichnet,* dass** der Pressring (9) aus Aluminium gefertigt ist und in verpresstem Zustand zu einem mindestens sechseckigen Ring umgeformt ist, sodass das in seinem Innern verklemmte Kabel (3) im Querschnitt zu einem ebensolchen mindestens sechseckigen Querschnitt verpresst ist.

**5.** Steckerverbindung für Hochspannungskabel von Elektro- und Hybridfahrzeugen nach einem der Ansprüche 1 bis 3, ***dadurch gekennzeichnet,* dass** der Pressring (9) aus Stahl gefertigt ist und in verpresstem Zustand zu einem mindestens sechseckigen Ring umgeformt ist, sodass das in seinem Innern verklemmte Kabel (2) im Querschnitt zu einem ebensolchen mindestens sechseckigen Querschnitt verpresst ist.

**6.** Steckerverbindung für Hochspannungskabel von Elektro- und Hybridfahrzeugen nach einem der Ansprüche 1 bis 3, ***dadurch gekennzeichnet,* dass** der Pressring (9) aus einem Buntmetall gefertigt ist und in verpresstem Zustand zu einem mindestens sechseckigen Ring umgeformt ist, sodass das in seinem Innern verklemmte Kabel (2) im Querschnitt zu einem ebensolchen mindestens sechseckigen Querschnitt verpresst ist.

**7.** Steckerverbindung für Hochspannungskabel von Elektro- und Hybridfahrzeugen nach einem der Ansprüche 1 bis 3, ***dadurch gekennzeichnet,* dass** der Pressring (9) aus einer Metall-, Leichtmetall-, Stahloder Buntmetall-Legierung gefertigt ist und in verpresstem Zustand zu einem mindestens sechseckigen Ring umgeformt ist, sodass das in seinem Innern verklemmte Kabel (2) im Querschnitt zu einem ebensolchen mindestens sechseckigen Querschnitt verpresst ist.

**8.** Steckerverbindung für Hochspannungskabel von Elektro- und Hybridfahrzeugen nach einem der vorhergehenden Ansprüche, ***dadurch gekennzeichnet,* dass** der zu umspritzende Kabelabschnitt der Steckerverbindung mit einem Primer ausgerüstet ist, zur innigen Verbindung mit dem aufzuspritzenden, die Steckerverbindung zu umschliessenden thermoplastischen oder reinen Elastomer.

**9.** Steckerverbindung für Hochspannungskabel von Elektro- und Hybridfahrzeugen nach Anspruch 8, ***dadurch gekennzeichnet,* dass** der zu umspritzende Kabelabschnitt der Steckerverbindung mit einem Primer ausgerüstet ist, der säurehaltig ist.

**10.** Steckerverbindung für Hochspannungskabel von Elektro- und Hybridfahrzeugen nach einem der vorhergehenden Ansprüche, ***dadurch gekennzeichnet,* dass** sie mit einem einen Primer enthaltenden thermoplastischen oder reinen Elastomer umspritzt ist.
